# EUROPEAN PATENT SPECIFICATION

(11) **EP 1 375 015 B1**
(45) Date of publication and mention of the grant of the patent: **26.04.2006**
(21) Application number: 03004293.1
(22) Date of filing: 27.02.2003
(51) Int. Cl.: B05D 7/00, B32B 5/16

(54) **Surface functional member**
Oberflächiges funktionales Element
Elément fonctionnel de surface

(30) Priority: 24.09.2002 JP 2002277339; 27.06.2002 JP 2002187815
(43) Date of publication of application: 02.01.2004
(73) Proprietor: FUJI PHOTO FILM CO., LTD., Minami-Ashigara-shi, Kanagawa (JP)
(72) Inventor: Kawamura, Koichi, Fuji Photo Film Co., Ltd., Haibara-gun, Shizuoka (JP); Kano, Takeyoshi, Fuji Photo Film Co., Ltd., Haibara-gun, Shizuoka (JP); Takahashi, Miki, Fuji Photo Film Co., Ltd., Haibara-gun, Shizuoka (JP)
(74) Representative: HOFFMANN EITLE

(56) References cited:
- EP-A- 1 216 831
- EP-A- 1 271 561
- EP-A- 1 281 516
- EP-A- 1 282 175
- EP-A- 1 302 504
- EP-A- 1 336 637

## Description

### FIELD OF THE INVENTION

The present invention relates to surface functional members, and in particular, to surface functional members having a functional surface layer having various functional fine particles adsorbed thereon, such as surface roughing members, conductive members, and light shielding members.

### BACKGROUND OF THE INVENTION

Hitherto, there have been proposed various members having a surface layer having various functions formed thereon, which are prepared by adsorbing functional fine particles on an arbitrary substrate. For example, there are enumerated antireflection members on which irregularities are formed by metallic finer particles, conductive members having conductive fine particles adsorbed thereon, antifouling/antibacterial members having antibacterial metallic (metal oxide) finer particles adsorbed thereon, gas barrier films for lowering gas permeability by utilizing a laminate structure of fine particles, and light shielding members using a fine particle member to ultraviolet light, infrared light or visible light.

As a representative example thereof, surface roughing members having prescribed fine irregularities are useful as a material that can control a refractive index on the interface and prevent the reflection of light.

In recent years, image displays represented by liquid crystal display (LCD), plasma display panel (PDP), cathode ray tube display (CRT), and electroluminescent (EL) lamp have been widely used in various fields including not only television sets and computers but also various mobile units that have recently been diffused, and remarkably expanded. With the enhancement of the function of various units to be used for display, realization of higher image quality and lower electric power consumption is being demanded. For achieving the higher image quality, not only enhancement of the pixel density of image and realization of clear color tones but also antireflection performance of preventing reflection of light such as illuminations to display surfaces are important factors.

In particular, it may be, as a matter of course, assumed that displays for portable terminal that have recently been remarkably diffused are also used outdoors. Accordingly, a demand to have a higher antireflection performance to prevent reflection of external light such as sunlight and fluorescent light to displays is increasing more and more.

Further, LCDs having lightweight, compact and general-purpose characteristics are widely used. For these mobile units (portable terminals), a touch panel input mode, i.e., a mode of operation by direct touch of a plastic pen or finger to a prescribed region on the display surface, is widely used. Thus, characteristics including not only the image quality and antireflection performance of the display surface but also durability such as abrasion resistance and antifouling properties have become important.

With respect to the antireflection, there has hitherto been generally employed a method in which the incident surface of light is roughed to scatter or diffuse the light. As the roughing treatment, there are employed a method of directly roughing the substrate surface by sandblasting, embossing, etc. and a method of applying a filler-containing coating solution onto the substrate surface and then drying to provide a roughed surface.

Among them, the method of providing a filler-containing surface-roughed layer on the substrate surface is generally used at present from the standpoints of controllability of the size of irregularities of the roughed surface and easiness of the production.

For example, JP-A-6-18706 (the term "JP-A" as used herein means an "unexamined published Japanese patent application") proposes a surface-roughed layer comprising a UV-curing resin and resin beads as construction factors for the purpose of adapting to a highly transparent plastic film having poor heat resistance.

Further, there is a proposal to use an inorganic pigment such as silica having superior abrasion resistance in place of the resin beads. However, such an inorganic pigment is problematic in dispersibility and involves a problem such that a uniform surface-roughed layer is hardly formed. Then, for example, JP-A-11-287902 proposes a surface-roughed layer using two kinds of pigments consisting of silica and a resin filler having good dispersibility.

However, any of these methods are a method in which a filler for forming irregularities is applied on the substrate using a binder and involve a possibility that the irregularities are relieved by the influence of the binder, resulting in difficulty of obtaining the antireflection performance as counted. Further, these methods involve a potential issue such that when for enhancing the effect by irregularities of the filler, the binder is diluted, or the amount of the binder to be used is lowered, the film strength is lowered, leading to a problem in durability.

As other method of forming an antireflection layer, there is known a method in which a material having a high refractive index and a material having a low refractive index are alternately laminated to form a multilayered structure. Concretely, as the method of forming the multilayered structure, there are enumerated a vapor phase method in which a low-refractive material represented by SiO₂ and a high-refractive material such as TiO₂ and ZrO₂ are alternately subjected to film formation by vapor deposition, etc. and a sol-gel method utilizing hydrolysis or polycondensation of an metal alkoxide.

With respect to the method of forming an antireflection layer having a multilayered structure, in the case of the vapor phase method by vapor deposition, etc., it is difficult to produce ones having a large area; and in the case of the sol-gel method, not only the production cost is high for the reason of repeat of application and baking, but also since the resulting antireflection layer is colored purple or green, there is a problem that stains stand out.

EP 1 216 821 A1 discloses a lithographic printing plate precursor comprising a support having a hydrophilic surface containing hydrophilic graft polymer chains and a heat-sensitive layer containing at least either of fine particulate polymer and microcapsules. According to the teaching of this document, fine metal particles may also be used as the light-heat converting agent in the heat sensitive layer. The fine particles may be selected from group 8 and group 1B metals or their alloys, fine particles of Ag, Au, Cu, Pt, Pd or their alloys being particularly preferred.

EP 1 271 561 A2 represents prior art in the sense of Article 54 (3) EPC. According to the first aspect of this invention, there is provided a conductive film comprising a support having introduced to at least one surface thereof ionic groups to which conductive fine particles having electrical charges so as to be bindable to the ionic groups, are electrostatically bonded. The fine particles to be used include various metals, oxide semiconductors, compounds having a spinel structure, conductive nitrides, conductive borides and conductive polymers.

EP 1 302 504 A1 also represents an earlier application in the sense of Article 54 (3) EPC. This document discloses a hydrophilic member precursor having a hydrophilic surface that is formed by contacting a hydrophobic polymer-containing layer formed on a substrate with a composition that contains a hydrophilic polymer comprising a polymerizing group followed by applying energy to directly chemically bond the hydrophilic polymer to the hydrophobic polymer-containing layer. This document also teaches that hydrophilic groups in the hydrophilic polymer having a negative or positive charge can be combined with metal particles.

EP 1 282 175 A2 also represents prior art pursuant to Article 54 (3) EPC. This document describes a conductive pattern material wherein a pattern-forming layer is formed on a support surface which allows the formation of a hydrophilic/hydrophobic region directly binding to the support surface due to energy imparted. The pattern-forming layer can be prepared using surface graft polymerization. Various conductive fine grains can be adsorbed to the afore-mentioned hydrophilic pattern including metallic particles, oxide semiconductor particles, spinell compound particles, conductive nitride particles, conductive boride particles and conductive high polymer particles.

EP 1 336 637 A1 also representing prior art in the sense of Article 54 (3) EPC discloses a gas barrier film comprising a support including a surface, on which a graft polymer chain having a polar group is present, and an inorganic thin film formed on the surface. Examples of the polar group include a hydrophilic group and a non-ionic polar group. The inorganic material forming the film is preferably a metal such as aluminum, tin and zinc or metallic oxide such as silicon oxide, zirconium oxide, titanium oxide, alumina, magnesium oxide and tin oxide. The inorganic film can be formed by gas phase methods such as sputtering or the so-called fine particle adsorption method wherein an ultra fine powder having an average particle diameter of 100 nm or less is deposited.

EP 1 281 516 A2, another earlier application in the sense of Article 54 (3) EPC, discloses a planographic printing plate precursor comprising a substrate comprising a hydrophilic surface having disposed thereon a heat-sensitive layer containing a thermoplastic particulate polymer having functional groups capable of interacting with a hydrophilic surface. Preferably hydrophilic polymer chains are present on the hydrophilic surface of the substrate.

### SUMMARY OF THE INVENTION

Taking into account the foregoing defects of the prior art, an object of the invention is to provide a surface functional member having an adsorbing layer of fine particles with superior durability, comprising functional fine particles firmly adsorbed in a single layer or laminated layer state on the surface thereof, in which an effect of the adsorbed functional particles can endure.

Another object of the invention is to provide a surface functional member having the foregoing characteristics and capable of readily forming an adsorbing layer of fine particles having a multilayered structure.

The present inventors paid attention to the characteristics of a substrate having a graft polymer on the surface and made extensive and intensive investigations. As a result, it has been found that when a polar group is introduced into a graft polymer, it is possible to align and adsorb fine particles having strong adsorbing properties to fine particles having physical properties capable of forming a mutual action with the polar group and having high density and specified physical properties and that it is possible to obtain an adsorbing layer of fine particles while making the best use of a superior function that the fine particles possess by utilizing such matter, leading to accomplishment of the invention.

The invention has solved the foregoing problems by providing a surface functional member comprising: a support having a surface bonded to a graft polymer chain having a polar group (e.g. a non-ionic polar group); and an adsorbing layer comprising particles capable of bonding to the polar group, wherein at least part of the particles are bonded to the polar group and the particles are selected from the following materials:
(a) alkali metals,
(b) alkaline earth metals,
(c) silicon,
(d) transition metals selected from Ni, Pb, Fe, Ir, Os, Ru, W, Mo, and alloys thereof, or Ti, V, Mn, Ni, Cd, Y, Ge, In and Ga;
(e) metal oxides selected from iron oxide, cobalt oxide, chromium oxide, antimony oxide, indium tin oxide and ruthenium oxide (RuO₂),
(f) metallic compound semiconductors selected from iron oxide, tungsten oxide and strontium titanate and metallic compound semiconductors modified with platinum, gold, palladium, silver, copper, nickel, cobalt, rhodium, niobium, or tin; and
the use of a surface functional member comprising: a support having a surface bonded to a graft polymer chain having a polar group; and an adsorbing layer comprising particles of a metal or metal compound capable of bonding to the polar group, wherein at least part of the particles are bonded to the polar group,
as antireflection member, surface antibacterial material, UV light-absorbing member or optical material.

The action of the invention is not always clear. But, in the invention, a polar group is introduced on a support, and a layer in which metallic functional fine particles such as metal oxides, having physical properties of forming some mutual action with the polar group to bond to it, are densely and uniformly filled is formed on the surface of the support. As a result, a surface layer made of the fine particles is formed without using a binder, and the surface is provided with an adsorbing layer of the fine particles, in which the shape of the fine particles, or the function possessed by the fine particles is reflected as it is. Thus, a functional surface layer such as a surface-roughed layer exhibiting a uniform irregular shape and a conductive layer of conductive fine particles is formed, whereby the surface layer can reveal the superior function. Further, it is estimated that since the polar group present on the surface and the fine particles capable of being adsorbed thereon are firmly adsorbed, the abrasion resistance increases, whereby high durability of the adsorbing layer of the fine particles are revealed.

The presence of the adsorbing layer of the fine particles having such a structure can be confirmed by externally observing the surface using an atomic force microscope (AFM) or observing the cross-section by a scanning electron microscope, to examine whether a minute irregular shape of the surface or a laminate state of the fine particles is formed. Further, the presence of the functional layer made of the fine particles can also be confirmed by measuring the physical properties revealed by the functional fine particles.

### DETAILED DESCRIPTION OF THE INVENTION

The invention will be described below in detail.

In the surface functional member of the invention, a graft polymer chain having a polar group is present on at least one surface of a support and the surface having a polar group is preferably prepared by the surface grafting method. Further, in the case of obtaining light-transmitting members such as antireflection films and infrared light absorbing films, it is preferred to use a transparent substrate as the substrate of the support.

### [Substrate having a polar group introduced on the surface thereof]

The surface bonded to a graft polymer chain having a polar group as prepared by the surface grafting method means a state in which a monomer having a polar group in the side chains thereof is grafted on the surface constituting the substrate by the conventionally known method using light, electron beams, heat or the like, or a macromer, a polymer, or the like having a polar group in the side chains thereof is bonded on the surface of the support, to form a surface having the polar group. Further, as the polar group, are preferable polar groups having a hetero atom. As the hetero atom, are preferable a nitrogen atom, a sulfur atom, and an oxygen atom. Examples of the polar group having a hetero atom include a heteroaromatic group containing a nitrogen atom or a sulfur atom, such as a pyridine group, a quinoline group, a thiophene group, and a benzophenone group; an amino group such as a dimethylamino group and a diethylamino group; an ether group or thioether group containing an oxygen atom or a sulfur atom, such as an ethylene oxy group and a thioethylene oxy group; a lactone group such as butyrolatone; and a lactam group such pyrrolidone.

Concretely, as the method of introducing the graft polymer chain having a polar group in the side chains thereof on a support such as a film substrate, can be referred to the description of *NIPPON GOMU KYOKAISHI* (Journal of the Society of Rubber Industry, Japan), 1992, Vol. 65, p. 604, Shinji Axai, "Surface Modification and Adhesion by Macromonomers". Besides, a method called the surface graft polymerization method as described below can also be employed.

The surface graft polymerization method as referred to herein is a method in which an active seed is given on a high-molecular compound chain, and another monomer to be initiated by the active seed is polymerized to synthesize a graft polymer, and especially, when the high-molecular compound to give an active seed forms a solid surface, the polymerization is called surface graft polymerization.

As the surface graft polymerization method for realizing the invention, any of the known methods described in the literature documents can be used. For example, *SHIN KOBUNSHI JIKKENGAKU* 10 (New Polymer Experiment 10), edited by the Society of Polymer Science, Japan, 1994, p. 135, by Kyoritu Shuppan describes photograft polymerization and plasma irradiation graft polymerization as the surface graft polymerization method. Further, Takeuchi Ed., *KYUCHAKU GIJUTSU BINRAN* (Adsorption Technology Handbook), February 1999, pp. 203 & 695, by NTS describes radiation irradiation graft polymerization with γ-rays, electron beams, etc.

As a concrete method of the photograft polymerization, are employable the methods as described in JP-A-63-92658, JP-A-10-296895, and JP-A-11-119413.

As means for preparing the surface having a surface graft polymer, in addition to the foregoing methods, a method in which a reactive functional group such as a trialkoxysilyl group, an isocyanate group, an amino group, a hydroxyl group, and a carboxyl group is imparted to the terminal ends of the high-molecular compound chain, which is then coupled with the functional group on the surface of the substrate to form the surface having a surface graft polymer can be employed. Further, recently, it is possible to utilize atom transfer radical polymerization as the surface graft polymerization, and it is found that by using this method, it is possible to bond the functional group to the high-density graft polymer surface. This polymerization method can be carried out by referring to K. Matyjaszewski, et al., *Polymer Preprints*, 2000, Vol. 41, p. 411, M.L. Bruening, et al., *J. Am. Chem. Soc.,* 2000, Vol. 122, p. 7616, and *Macromolecules,* 2002, Vol. 35, p. 1175.

Examples of the ionic monomer capable of an ionic group as a polar group, which can be suitably used in the invention, include the foregoing monomers having a positive charge, such as ammonium and phosphonium, and monomers having an acid group having a negative charge or capable of being dissociated into a negative charge, such as a sulfonic acid group, a carboxyl group, a phosphoric acid group, and a phosphonic acid group.

In the invention, particularly useful examples of the ionic monomer include (meth) acrylic acid or alkali metal salts and amine salts thereof ; itaconic acid or alkaline metal salts and amine salts thereof; allylamine or hydrogen halide salts thereof ; 3-vinylpropionic acid or alkali metal salts and amine salts thereof; vinylsulfonic acid or alkali metal salts and amine salts thereof; vinylstyrenesulfonic acid or alkali metal salts and amine salts thereof; 2-sulfoethylene (meth)acrylate, 3-sulfopropylene (meth)acrylate, or alkali metal salts and amine salts thereof; 2-acrylamide-2-methylpropanesulfonic acid or alkali metal salts and amine salts thereof; and phosphoric acid monomers such as mono(2-acryloyloxyethyl) acid phosphate, mono(2-methacryloyloxyethyl) acid phosphate, acid phosphoxypolyethylene glycol mono(meth)acrylate, or alkali metal salts and amine salts thereof.

Specific examples of monomers that are particularly useful as the nonionic polar group-containing monomer having a hetero atom such as nitrogen, sulfur, and oxygen include 4-vinylpyridine, 2-vinylpyridine, N-vinylpyrrolidone, N,N-dimethylaminoethyl (meth)acrylate, N-morpholinoethyl (meth)acrylate, methoxydiethylene glycol (meth)acrylate, methoxypolyethylene glycol (meth)acrylate, γ-butyrolactone (meth)acrylate, and mevalonic lactone (meth)acrylate.

In the case where the thus obtained surface functional member is used as a surface roughing member for an antireflection material, in image displays for high resolution provided with high-density pixels or small-sized high-resolution image displays to be used for mobiles, in order to control the surface irregular properties to be formed, it is preferred to use a transparent substrate having surface smoothness. But, in order to more enhance the macro antireflection performance, for the purpose of increasing the surface area to introduce a larger amount of the ionic group, it is also possible to rough the surface of the substrate in advance.

As the method of roughing the surface, known methods adapting to the material quality of the substrate can be chosen. Concretely, in the case where the substrate is a resin film, glow discharge treatment, sputtering, sandblast polishing, buff polishing, particle adhesion, and particle coating can be enumerated. Further, in the case where the substrate is a metal sheet such as an aluminum sheet, a method of mechanical roughing, a method of electrochemically dissolving and roughing the surface, and a method of chemically selectively dissolving the surface can be enumerated. As the mechanical method, known methods such as ball polishing, brush polishing, blast polishing, and buff polishing can be used. Further, as the electrochemical roughing method, a method in which the roughing is carried out in a hydrochloric acid or nitric acid electrolytic solution by an alternating current or a direct current. Moreover, a combination of the both methods can be used.

### [Fine particles capable of forming a mutual action with a polar group and bonding to it]

### 1. Fine particles:

Next, the fine particles that can bond to the polar group. The metallic fine particles to be used are properly chosen according to the purpose of the functional surface. The metal as referred to herein includes single metal elements such as transition metals, alkali metals, alkaline earth metals, aluminum, and silicon as well as metallic compounds such as metal oxides. Since the fine particles are polarly adsorbed, the particle size and adsorbing amount are restricted by the fine particles. In general, the particle size of the fine particles is preferably in the range of from 0.1 nm to 1 µm, more preferably from 1 nm to 300 nm, and most preferably from 5 nm to 100 nm.

In the invention, the particles bonding to the graft interface by the mutual action are regularly aligned substantially in the single layer state according to the existing state of the polar group. Alternatively, one metallic fine particle on a nano-order scale is adsorbed on each polar group of the long graft chain, and as a result, the particles are aligned in a multilayered state.

Next, the functional metallic fine particles that can be used in the invention will be described according to the purpose of the surface functional member.

### 1-1. Metallic fine particles for antireflection member:

In the case where the functional member of the invention is used as an antireflection member, it is preferred to use at least one metallic fine particle selected from metal oxide finer particles. By using such fine particles, it is possible to provide a surface roughing member that is suitably used for the image display surface, has a uniform superior antireflection performance, can give a clear image without lowering the image contrast, and can be suitably used for an antireflection material capable of achieving superior durability.

Suitable examples of the metal oxide fine particles include silica (SiO₂), titanium oxide (TiO₂), zinc oxide (ZnO), and tin oxide (SnO₂). Further, fines particles of pigments so-called as transparent pigments or white pigments, such as calcium carbonate, aluminum hydroxide, magnesium hyroxide, clay, and talc, can also be used so far as they have a preferred shape as described below.

In this utility, the fine particles preferably have a particle size in the range of from 100 nm to 300 nm, and more preferably from 100 nm to 200 nm. In this embodiment, the particles to be ionically bonded to the graft interface are regularly aligned substantially in the single layer state. Especially, in the case where the surface roughing member of the invention is used as an antireflection material, it is preferred from the standpoint of the effect to control the film thickness to be 1/4 of the wavelength (λ) to be prevented from the reflection. Taking into consideration the matter that the particle size of the fine particles is substantially the same as the film thickness of the roughed surface, when the particle size of the fine particles is smaller than 100 nm, the roughed surface is too thin so that the antireflection properties are liable to be lowered. On the other hand, when it exceeds 300 nm, since the diffusion reflection is large, and cloudiness is remarkable, a transparency feeling is hardly obtained. Further, the contact area to be polarly bonded to the graft interface is too small so that the strength of the roughed surface is liable to be lowered.

### 1-2. Fine particles for conductive film:

In the case where the functional member of the invention is used as a conductive film, at least one fine particle selected from conductive or semiconductor metallic fine particles, metal oxide fine particles and metallic compound fine particles as defined in claim 1 as the functional fine particles is used.

As the conductive metallic fine particles or metal oxide fine particles, conductive metallic compound powders having a specific resistivity of 1,000 Ω·cm or less can be used. The conductive metallic fine particles or metal oxide fine particles are preferably selected from nickel (Ni), lead (Pb), iron (Fe), iridium (Ir), osmium (Os), ruthenium (Ru), tungsten (W), and molybdenum (Mo), and alloys thereof, ITO (indium tin oxide), and ruthenium oxide (RuO₂).

### 1-3. Metallic fine particles for surface antibacterial material:

In the case where the functional member of the invention is used as an antibacterial material, it is preferred to use metallic fine particles having an antibacterial action or a sterilizing action as the functional fine particles.

Examples of the material capable of forming such metallic (compound) fine particles include single metals having fertilizing properties, such as silver (Ag) and copper (Cu); alloys containing at least one of these metals; and metal oxides of these metals. Further, metallic compound semiconductors that reveal a sterilizing action upon irradiation with a light having a wavelength including a ultraviolet light region (such as a fluorescent lamp and sunlight), such as titanium oxide, iron oxide, tungsten oxide, zinc oxide, strontium titanate, and metallic compounds obtained by modifying the foregoing compounds with platinum, gold, palladium, silver, copper, nickel, cobalt, rhodium, niobium, tin, etc.

### 1-4. Fine particles for ultraviolet light-absorbing member:

In the case where the functional member of the invention is used as a ultraviolet light-absorbing member, it is preferred to use metal oxide fine particles such as iron oxide, titanium oxide, zinc oxide, cobalt oxide, chromium oxide, tin oxide, and antimony oxide because they have a high shielding function in ultraviolet light A and B regions (light wavelength: 280 to 400 nm). In the invention, when a high-molecular compound is used as the substrate and complexed with the foregoing metal oxide fine particles, it is expected that the resulting material reveals high function and processability as a ultraviolet light-shielding film sheet and is applicable to various utilities. Further, it is also expected that by utilizing the ultraviolet light-shielding effect of the metal oxide, the light fastness of high-molecular materials is improved.

### 1-5. Fine particles for optical material:

Examples of functional fine particles that are used for color filters or sharp cut filters to be used for optical instruments, or non-linear optical materials include fine particles made of a semiconductor such as CdS and CdSe or a metal such as gold. When silica glass or alumina glass is used as the substrate, it can be expected that the resulting material is suitably used as not only color filters, etc. but also non-linear optical materials such as optical switches and optical memory materials because it is confirmed that the three-dimensional light non-linear susceptibility is large. Examples of the useful fine particles include noble metals such as gold, platinum, silver, and palladium, and alloys thereof. From the standpoint of safety, substances that are not abruptly dissolved by an alkali, such as gold and platinum, are suitably used.

Further, examples of superfine particles of a metal (compound) suitable as a non-linear optical material include single metals such as gold (Au), silver (Ag), copper (Cu), platinum (Pt), palladium (Pd), rhodium (Rh), osmium (Os), iron (Fe), nickel (Ni), and ruthenium (Ru), and alloys containing at least one of these metals, each having a mean particle size of from 10 to 1,000 angstroms. The particles may be any of primary particles and secondary particles, but those that do not scatter a visible light are preferred. Among them, are suitable noble metal fine particles selected from Au, Pt, Pd, Rh, and Ag, or metal fine particles selected from Ti, V, Cr, Mn, Fe, Ni, Cu, Zn, Cd, Y, W, Sn, Ge, In, and Ga, each of which is independently dispersed in a solvent such as toluene and has a particle size of 10 nm or less.

In the case where non-linear optical materials are prepared by using these superfine particles in a usual method, i.e., a sol-gel method, an impregnation method, a sputtering method, an ion-implantation method, or a melt deposition method, since the fine particles are liable to be readily coagulated, there were involved problems such that it is difficult to increase the density of the fine particles in the complex and that the productivity is lowered. Especially, ones having a low density of the fine particles and a low degree of contribution of the fine particles to the physical characteristics are restricted in terms of the utility. Therefore, such superfine particles were not suitable for image memories utilizing a three-dimensional non-linear optical effect, optical integrated circuits, etc. According to the configuration of the invention, the fine particles are ionically bonded directly to the ionic groups on the substrate surface, and the ionic groups are present in a high density by grafting. Accordingly, it is possible to easily increase the density of the fine particles. Thus, it may be said that these fine particles according to the invention are especially suitable for the utility of non-linear optical materials.

### 1-6. Fine particles for gas barrier film:

In the case where the surface functional member of the invention is used as a gas barrier film, as the functional fine particles, are preferable superfine powders, i.e., fine particles having a mean particle size of 100 nm or less, and preferably 50 nm or less. The superfine powder can be used in a single state of the foregoing inorganic compounds or metals or in a state of a mixture of two or more thereof. When an electrically insulating inorganic compound is used as the superfine powder, it is possible to render the whole of the functional member electrically insulating.

Suitable examples of the substrate include organic resin films having gas barrier properties, such as polyethylene terephthalate, polyamides, polypropylene, ethylene-vinyl alcohol copolymers, and polyvinyl alcohol.

That is, by selecting a substrate having a polar group introduced on at least one surface thereof and the kind of metallic fine particles having physical properties such that they can be bonded to the polar group and properly combining them, it is possible to provide various configurations of members having a functional surface utilizing the physical properties that the functional fine particles possess.

### [Adsorption of fine particles onto polar group]

According to one of specific embodiments of the adsorption, a graft polymer chain of polyvinylpyridine is introduced on the surface of a support by using a nonionic monomer having, for example, a pyridine group as the polar group, the resulting substrate is immersed in a silica fine particle dispersion in a prescribed period of time, the excessive dispersion is rinsed with a solvent and removed, whereby an adsorbing layer of fine particles in which the silica fine particles are densely adsorbed is formed on the surface of the transparent substrate.

Thus, it is possible to provide an adsorbing layer of metallic fine particles having a desired function by introducing the polar group on the substrate of the support and adsorbing the foregoing fine particles thereon. The film thickness of the adsorbing layer of the metallic fine particles can be chosen depending on the purpose, but in general, is preferably in the range of from 1 nm to 1 µm, and more preferably from 10 nm to 0.5 µn. When the film thickness is too thin, the scratch resistance is liable to be lowered, whereas when it is too thick, the transparency is liable to be lowered.

### (Substrate)

In the invention, as the substrate of the support that is used for forming the surface where the graft polymer chain having a polar group in the side chains is present, any plate-like materials that are dimensionally stable and meet the required flexibility, strength and durability can be used. In the case of selecting a transparent substrate required to have light transmission properties, examples of the suitable substrate include a glass sheet, a quartz sheet, and plastic films (such as cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonates, and polyvinyl acetal). Further, examples of a substrate of the surface functional member not required to have transparency include a silicon sheet, paper, a plastic-laminated paper, metal sheets (such as aluminum, zinc, and copper), and papers or plastic films laminated or vapor deposited with the foregoing metals, in addition to the foregoing materials.

The substrate is properly selected according to the relation with the utility and fine particles to be adsorbed, but a substrate having a surface made of a high-molecular resin is preferred from the viewpoints of processability and transparency. Specifically, any of resin films, transparent inorganic substrates (such as glass) having a resin-coated surface, and composite materials whose surface layer is made of a resin layer are suitable.

Representative examples of the substrate having a resin-coated resin include laminated sheets whose surface is laminated with a resin film, primer-processed substrates, and hard coat-processed substrates. Representative examples of the composition material whose surface layer is made of a resin layer include resin sealing materials having an adhesive layer provided on the back surface thereof and laminated glasses that are a laminate of a glass and a resin.

In the surface functional member of the invention, a layer in which fine particles having a specified function such as metal oxide fine particles represented by silica are electrostatically, densely and uniformly adsorbed onto the polar group as introduced on the substrate is formed, and a surface layer in which the fine particles are adsorbed in a single layer state or multilayered state onto the polar group is formed without using a binder. Accordingly, the surface becomes a functional surface reflecting the physical properties of the fine particles as they are. For example, in the case where fine particles for the surface roughing member are used as the fine particles, a roughed surface having uniform irregular properties of the shape of the fine particles and uniform minute irregularities is formed. In addition, in the case where the surface roughing member is used as an antireflection material, since the layer itself is a thin layer while achieving the high antireflection performance, and when a transparent substrate is used as the substrate, there is no possibility of hindering the light transmission properties, it can be used for not only reflection type image displays but also transmission type image displays.

By properly selecting the functional fine particles, it is possible to form an adsorbing layer of fine particles capable of reflecting the characteristics of the functional fine particles by a relatively simple processing of an arbitrary substrate surface. In addition, since the adsorbing layer of fine particles capable of revealing the superior functionality has good durability, there gives rise to an advantage such that the member can be suitably used for a wide range of purposes as described previously.

With respect to the utility, by selecting the metallic fine particles, it is possible to reveal various functions on the functional surface, for example, to reveal an electronic or electric function on the functional surface by conductive inorganic fine particles, to reveal a magnetic function on the functional surface by magnetic fine particles such as ferrite particles, and to reveal an optical function on the functional surface by fine particles to absorb, reflect and scatter a light having a specific wavelength. The surface functional member of the invention can be used in a wide range of field including various industrial products, medicaments, catalysts, varistors, and paints. Further, in addition to these various functions that the various fine particle constitutional materials possess, when a high-molecular material is used as the substrate, it is also possible to utilize the easiness of forming processing that the high-molecular material possesses, and hence, development of novel materials can be expected.

Specific examples of the utility over a wide range include optical articles; sunglasses; applications to shielding films, shielding glasses, light-shielding windows, light-shielding containers, light-shielding plastic bottles, etc. against a ultraviolet light, a visible light or an infrared light; antibacterial films, microorganism-proof filters, antibacterial plastic moldings, fishing nets, various OA instruments or home appliances such as television parts, telephone parts, OA instrument parts, vacuum cleaner parts, electric fun parts, air conditioner parts, refrigerator parts, washing machine parts, humidifier parts, and dishwasher dryer parts; sanitary goods such as toilet seats and washstand parts; other building materials, vehicle parts; daily necessaries; toys; and miscellaneous goods.

### EXAMPLES

The invention will be specifically described below with reference to the following Examples, but it should not be construed that the invention is limited thereto.

### (Example 1)

### Preparation of substrate A having surface graft polymer:

### [Preparation of surface polyvinylpyridine graft by atom transfer radical polymerization]

A thoroughly rinsed glass substrate was immersed in a 1 % toluene solution of 5-(trichlorosilylpentyl)-2-bromo-2-methyl Propionate (initiator-terminated silane coupling agent) under an argon gas stream. After immersing overnight at room temperature, the resulting glass substrate was taken out and rinsed with toluene and methanol to obtain a glass substrate having the initiator-terminated silane coupling agent fixed thereon. Incidentally, the initiator-terminated silane coupling agent, 5-(trichlorosilylpentyl) -2-bromo-2-methyl propionate, was synthesized by the method described in a literature document (C.J. Hawker, et al., *Macromolecules,* 1999, Vol. 32, p. 1424).

Next, 47.7 g of 4-vinylpyridine, 0.646 g of cuprous bromide, and 1.0 g of tris(2-dimethylaminoethyl)amine were dissolved in 100 mL of isopropanol, and the solution was deaerated for 15 minutes while flowing an argon gas stream. In this solution was immersed the foregoing glass substrate having the initiator-terminated silane coupling agent fixed thereon. After immersing for one hour, the glass substrate was taken out, rinsed with water and methanol, and further rinsed by rubbing the surface with a methanol-containing cloth (Bemcot, manufactured by Asahi Kasei Corporation). The film thickness was measured by ellipsometery (VB-250, manufactured by J.A. Woollam Co., Inc.). As a result, it was confirmed that the grafting occurred in a film thickness of 10 nm.

### [Metal oxide fine particles capable of mutually acting with the polar group]

In this Example, TiO₂ particles were used as the metal oxide particles.

### [Adsorption of particles on substrate]

In a dispersion consisting of 5 g of a TiO₂ dispersion [H40, manufactured by Taki Chemical Co., Ltd.] and 5 g of water was immersed the substrate A having the surface graft polymer for 20 minutes. Thereafter, the substrate surface was thoroughly rinsed with running water to remove the excessive fine particle aqueous dispersion. There was thus obtained a surface roughing member B, on the surface of which was formed a surface-roughed layer by adsorption of the fine particles.

The surface of the surface roughing member B was observed by a transmission electron microscope (JEM-200CX, manufactured by JEOL Ltd.) with a magnification of 100,000 times. As a result, it was confirmed that a minute irregular shape caused by the fine particles was formed.

### [Evaluation of antireflection performance]

A ratio of a light flux φr reflecting on the surface of surface roughing member a light flux φi incident to the surface of surface roughing member (φr/φi), i.e., a luminous reflectance (%), was measured by using a spectrometer. As a result, the surface roughing member B had a luminous reflectance of 0.2 %, and hence, was confirmed to have a superior antireflection performance.

### [Evaluation of abrasion resistance]

The resulting surface roughing member B was reciprocally rubbed 30 times by fingers by using a water-moistened cloth (Bemcot, manufactured by Asahi Kasei Corporation). After rubbing, the resulting surface was observed by a transmission electron microscope (JEM-200CX, manufactured by JEOL Ltd.) with a magnification of 100,000 times in the same manner. As a result, it was confirmed that in any of the surfaces, the same minute irregular shape caused by the fine particles as that before rubbing was observed. Thus, it was confirmed that the minute irregular shape of the surface was not damaged by rubbing.

### (Example 2)

In this Example, SiO₂ particles were used as the metal oxide particles.

### [Adsorption of particles on substrate]

In a dispersion of 10 g of silica fine particles having a mean particle size of 200 nm [Seahostar P-20, manufactured by Nippon Shokubai Co., Ltd.] in 90 g of cyclohexane was immersed the substrate A having the surface graft polymer as prepared in Example 1 for 20 minutes. Thereafter, the resulting substrate was thoroughly rinsed with acetone and running water to remove the excessive fine particle dispersion. There was thus obtained a surface roughing member C, on the surface of which was formed a surface-roughed layer by adsorption of the fine particles.

The surface of the surface roughing member C was observed by a transmission electron microscope (JEM-200CX, manufactured by JEOL Ltd.) with a magnification of 100,000 times. As a result, it was confirmed that a minute irregular shape caused by the fine particles was formed.

The resulting surface roughing member C was evaluated for the antireflection performance and abrasion resistance in the same manner as in Example 1. As a result, the surface roughing member C had a luminous reflectance of 0.2 %, and the change of the surface irregular shape after the rubbing treatment was not observed. Accordingly, even in this Example having a cationic surface, it was noted that the high antireflection performance and abrasion resistance of the surface were achieved.

It was confirmed from the evaluation results of these Examples that the surface functional member of the invention revealed the superior performance according to the function of the adsorbed particles and that the durability of the adsorbing layer of the fine particles formed on the surface was good. Thus, it was understood that the invention is useful for providing a material having a functional surface in various modes, which is suitable for the practical use.

According to the invention, it is possible to provide a surface functional member having an adsorbing layer of fine particles with superior durability, comprising functional fine particles firmly adsorbed in on the surface thereof, and capable of readily forming an adsorbing layer of fine particles, in which an effect of the adsorbed functional particles can endure.

### (Examples 3 and 4)

### [Preparation of support substrate having an ionic group as a polar group on the surface]

Using a planar magnetron sputtering device (CFS-10-EP70, manufactured by Shibaura Eletec Corporation), a biaxially stretched polyethylene terephthalate film having a film thickness of 188 µm (A4100, manufactured by Toyobo Co., Ltd.) was subjected to glow processing under the following condition.

### (Oxygen glow processing condition)

| | |
|---|---|
| Initial vacuum: | 1.2 × 10⁻³ Pa |
| Oxygen pressure: | 0.9 Pa |
| RF glow: | 1.5 kW |
| Processing time: | 60 seconds |

### (Introduction of ionic group)

Next, the glow-processed film was immersed in a nitrogen-bubbled sodium styrenesulfonate aqueous solution (10 wt %) at 70°C for 7 hours. The immersed film was rinsed with water for 8 hours. There was thus obtained a substrate A having sodium styrenesulfonate graft-polymerized on the surface thereof.

A substrate B as a surface-grafted film having acrylic acid grafted thereon was obtained in the same manner, except that the sodium styrenesulfonate was changed to acrylic acid.

### [Metal oxide fine particles capable of ionically bonding to the ionic group]

In this Example, TiO₂ particles having a positive charge were used as the metal oxide fine particles.

### [Coating of charged particles on substrate]

In a dispersion consisting of 5 g of a positively charged TiO₂ dispersion [H40, manufactured by Taki Chemical Co. , Ltd.] and 5 g of water were immersed the substrates A and B each having the surface graft polymer for 20 minutes . Thereafter, each substrate surface was thoroughly rinsed with running water to remove the excessive fine particle aqueous dispersion There were thus obtained surface roughing members A and B, on the surface of each of which was formed a surface-roughed layer by adsorption of the fine particles.

The surface of each of the surface roughing members A and B was observed by a transmission electron microscope (JEM-200CX, manufactured by JEOL Ltd.) with a magnification of 100,000 times. As a result, it was confirmed that in any of the surfaces, a minute irregular shape caused by the fine particles was formed.

### [Evaluation of antireflection performance]

A ratio of a light flux φr reflecting on the surface of surface roughing member a light flux φi incident to the surface of surface roughing member (φr/φi), i.e., a luminous reflectance (%), was measured by using a spectrometer. As a result, the surface roughing members A and B had a luminous reflectance of 0.2 % and 0.3 %, respectively, and hence, were confirmed to have a superior antireflection performance.

### [Evaluation of abrasion resistance]

Each of the resulting surface roughing members A and B was reciprocally rubbed 30 times by fingers by using a water-moistened cloth (Bemcot, manufactured by Asahi Kasei Corporation). After rubbing, the resulting surfaces were observed by a transmission electron microscope (JEM-200CX, manufactured by JEOL Ltd.) with a magnification of 100,000 times in the same manner. As a result, it was confirmed that in any of the surfaces, the same minute irregular shape caused by the fine particles as that before rubbing was observed. Thus, it was confirmed that the minute irregular shape of the surface was not damaged by rubbing.

### (Example 5)

### [Preparation of support substrate having an ionic group as a polar group on the surface]

The glow-processed film substrate as used in Example 3 was used. A substrate C as a surface-grafted film having cationic ammonium chloride grafted thereon was obtained in the same manner as in Example 3, except that N,N,N-trimethyl-N-(2-hydroxy-3-methacryloyloxypropyl)ammonium chloride (Blenmer QA, manufactured by NOF Corporation) was used as the monomer for introducing an ionic group.

### [Metal oxide fine particles capable of ionically bonding to the ionic group]

In this Example, SiO₂ particles having a positive charge were used as the metal oxide fine particles.

### [Coating of charged particles on substrate]

In a dispersion of 10 g of silica fine particles having a mean particle size of 200 nm [Seahostar P-20, manufactured by Nippon Shokubai Co., Ltd.] in 90 g of cyclohexane was immersed the substrate C having the surface graft polymer for 20 minutes. Thereafter, the resulting substrate was thoroughly rinsed with acetone and running water to remove the excessive fine particle dispersion. There was thus obtained a surface roughing member C, on the surface of which was formed a surface-roughed layer.

The surface of the surface roughing member C was observed by a transmission electron microscope (JEM-200CX, manufactured by JEOL Ltd.) with a magnification of 100,000 times. As a result, it was confirmed that a minute irregular shape caused by the fine particles was formed.

The resulting surface roughing member C was evaluated for the antireflection performance and abrasion resistance in the same manner as in Example 3. As a result, the surface roughing member C had a luminous reflectance of 0.2 %, and the change of the surface irregular shape after the rubbing treatment was not observed. Accordingly, even in this Example having a cationic surface, it was noted that the high antireflection performance and abrasion resistance of the surface were achieved.

### (Example 6)

### [Preparation of support substrate having an ionic group as a polar group on the surface]

On a polyethylene terephthalate (PET) film having a thickness of 188 µm, the following photopolyermizable composition was applied by suing a Rod Bar #17 and then dried at 80 °C for 2 minutes. Next, the applied film was preliminarily cured upon irradiation with a light by a 400 W high-pressure mercury vapor lamp (UVL-400P, manufactured by Riko-Kagaku Sangyo Co., Ltd.) for 10 minutes, to form an interlayer.

### (Photopolymerizable composition)

- Allyl methacrylate/methacrylic acid copolymer (molar ratio: 80/20, molecular weight: 100,000): 4 g
- Ethylene oxide-modified bisphenol A diacrylate (M210, manufactured by Toagosei Co., Ltd.): 4 g
- 1-Hydroxycyclohexyl phanyl ketone: 1.6 g
- 1-Methoxy-2-propanol: 16 g

The interlayer-formed PET film was immersed in an aqueous solution containing 20 % by weight of acrylic acid and 0.01 % by weight of sodium hypochlorite and irradiated with a light for 30 minutes in an argon atmosphere by using a 400 W high-pressure mercury vapor lamp.

After the light irradiation, the resulting film was well rinsed with ion-exchanged water to obtain a substrate D as a surface-grafted film having polyacrylic acid grafted thereon. The thickness of the grafted polyacrylic acid was measured by using ATR-IR (total reflection infrared light absorbing spectrum) and found to be 0.55 µm.

### [Metal oxide fine particles capable of ionically bonding to the ionic group]

In this Example, TiO₂ particles having a positive charge were used as the metal oxide fine particles.

### [Coating of charged particles on substrate]

In a dispersion consisting of 5 g of a positively charged TiO₂ dispersion [H40, manufactured by Taki Chemical Co. , Ltd.] and 5 g of water was immersed the substrate D having the surface graft polymer for 20 minutes. Thereafter, the substrate surface was thoroughly rinsed with running water to remove the excessive fine particle aqueous dispersion. There was thus obtained a surface functional member D having an adsorbing layer of fine particles, on the surface of which were adsorbed the TiO₂ fine particles.

The cross-section of the surface functional member D was observed by a scanning electron microscope (S800, manufactured by JEOL Ltd.) with a magnification of 100,000 times. As a result, it was confirmed that the TiO₂ fine particles were adsorbed in 10 layers.

### [Evaluation of ultraviolet light-shielding performance]

The surface functional member D was irradiated with a ultraviolet light having a wavelength of from 280 to 400 nm and measured for transmittance of ultraviolet light. As a result, the surface functional member D had a transmittance of 1.0 %, and hence, was confirmed to have a superior ultraviolet light-shielding performance.

### [Evaluation of abrasion resistance]

The resulting surface functional member D was reciprocally rubbed 30 times by fingers by using a water-moistened cloth (Bemcot, manufactured by Asahi Kasei Corporation) . After rubbing, the resulting surface was observed by a scanning electron microscope (S800, manufactured by JEOL Ltd.) with a magnification of 100,000 times in the same manner. As a result, it was confirmed that in any of the surfaces, the presence of the surface layer where the fine particles were adsorbed in multiple layers was observed as in that before rubbing. Thus, it was confirmed that the adsorbing layer of fine particles was not damaged by rubbing.

It was confirmed from the evaluation results of these Examples that the surface functional member of the invention revealed the superior performance according to the function of the adsorbed particles and that the durability of the adsorbing layer of the fine particles formed on the surface was good. Thus, it was understood that the invention is useful for providing a material having a functional surface in various modes, which is suitable for the practical use.

According to the invention, it is possible to provide a surface functional member having an adsorbing layer of fine particles with superior durability, comprising functional fine particles firmly adsorbed in a single layer or laminated layer state on the surface thereof, and capable of readily forming an adsorbing layer of fine particles, in which an effect of the adsorbed functional particles can endure.

This application is based on Japanese Patent application JP 2002-277339, filed September 24, 2002, and Japanese Patent application JP 2002-187815, filed June 27, 2002, the entire contents of those are hereby incorporated by reference, the same as if set forth at length.

## Claims

1. A surface functional member comprising: a support having a surface bonded to a graft polymer chain having a polar group; and an adsorbing layer comprising particles capable of bonding to the polar group, wherein at least part of the particles are bonded to the polar group and the particles are selected from the following materials:
(a) alkali metals,
(b) alkaline earth metals,
(c) silicon,
(d) transition metals selected from Ni, Pb, Fe, Ir, Os, Ru, W, Mo, and alloys thereof, or Ti, V, Mn, Ni, Cd, Y, Ge, In and Ga;
(e) metal oxides selected from iron oxide, cobalt oxide, chromium oxide, antimony oxide, indium tin oxide and ruthenium oxide (RuO₂),
(f) metallic compound semiconductors selected from iron oxide, tungsten oxide and strontium titanate and metallic compound semiconductors modified with platinum, gold, palladium, silver, copper, nickel, cobalt, rhodium, niobium, or tin.

2. The surface functional member according to claim 1 wherein the graft polymer chain is introduced on the surface by graft polymerisation.

3. Use of a surface functional member comprising:
a support having a surface bonded to a graft polymer chain having a polar group; and an adsorbing layer comprising particles of a metal or metal compound capable of bonding to the polar group, wherein at least part of the particles are bonded to the polar group,
as antireflection member, surface antibacterial material, UV light-absorbing member or optical material.

## Patentansprüche

1. Ein Oberflächenfunktionselement, welches umfaßt: einen Träger mit einer Oberfläche, die an eine Pfropfpolymerkette bindet, die eine polare Gruppe aufweist; und eine adsorbierende Schicht, die Teilchen umfaßt, welche in der Lage sind, an die polare Gruppe zu binden, worin mindestens ein Teil der Teilchen an die polare Gruppe gebunden ist und die Teilchen unter den folgenden Materialien ausgewählt werden:
(a) Alkalimetallen,
(b) Erdalkalimetallen,
(c) Silizium,
(d) Übergangsmetallen, ausgewählt unter Ni, Pb, Fe, Ir, Os, Ru, W, Mo und Legierungen davon oder Ti, V, Mn, Ni, Cd, Y, Ge, In und Ga,
(e) Metalloxiden, ausgewählt unter Eisenoxid, Kobaltoxid, Chromoxid, Antimonoxid, Indiumzinnoxid und Rutheniumoxid (RuO₂),
(f) halbleitenden metallischen Verbindungen, ausgewählt unter Eisenoxid, Wolframoxid und Strontiumtitanat und halbleitenden metallischen Verbindungen, die mit Platin, Gold, Palladium, Silber, Kupfer, Nickel, Kobalt, Rhodium, Niob oder Zinn modifiziert sind.

2. Oberflächenfunktionselement gemäß Anspruch 1, worin die Pfropfpolymerkette an der Oberfläche durch Pfropfpolymerisation eingeführt wird.

3. Verwendung eines Oberflächenfunktionselements, welches umfaßt: einen Träger mit einer Oberfläche, die an eine Pfropfpolymerkette bindet, die eine polare Gruppe aufweist; und eine adsorbierende Schicht, die Teilchen eines Metalls oder einer Metallverbindung umfaßt, die in der Lage sind, an die polare Gruppe zu binden, worin mindestens ein Teil der Teilchen an die polare Gruppe gebunden ist,
als Antireflexionselement, Oberflächen-antibakterielles Material, UV-Licht-absorbierendes Element oder optisches Material.

## Revendications

1. Membre fonctionnel de surface comprenant : un support ayant une surface liée à une chaîne de polymère greffée ayant un groupe polaire; et une couche adsorbante comprenant des particules capables de se lier au groupe polaire, dans lequel au moins une partie des particules est liée au groupe polaire et les particules sont sélectionnées parmi les matériaux suivants :
(a) des métaux alcalins,
(b) des métaux alcalino-terreux,
(c) le silicium,
(d) des métaux de transition sélectionnés parmi Ni, Pb, Fe, Ir, Os, Ru, W, Mo, et des alliages de ceux-ci, ou Ti, V, Mn, Ni, Cd, Y, Ge, In et Ga ;
(e) des oxydes métalliques sélectionnés parmi l'oxyde de fer, l'oxyde de cobalt, l'oxyde de chrome, l'oxyde d'antimoine, l'oxyde d'indium et d'étain et l'oxyde de ruthénium (RuO₂),
(f) des semi-conducteurs à composé métallique, sélectionnés parmi l'oxyde de fer, l'oxyde de tungstène et le titanate de strontium et des semi-conducteurs à composé métallique, modifiés avec du platine, de l'or, du palladium, de l'argent, du cuivre, du nickel, du cobalt, du rhodium, du niobium ou de l'étain.

2. Membre fonctionnel de surface selon la revendication 1 dans lequel la chaîne de polymère greffée est introduite sur la surface par polymérisation par greffage.

3. Utilisation d'un membre fonctionnel de surface comprenant : un support ayant une surface liée à une chaîne de polymère greffée ayant un groupe polaire ; et une couche adsorbante comprenant des particules d'un métal ou un composé métallique capable de se lier au groupe polaire, dans lequel au moins une partie des particules est liée au groupe polaire,
en tant que membre anti-reflet, matériau antibactérien de surface, membre absorbant la lumière UV, ou matériau optique.
